# EUROPÄISCHE PATENTSCHRIFT

(11) **EP 0 487 670 B1**
(45) Veröffentlichungstag und Bekanntmachung des Hinweises auf die Patenterteilung: **08.03.1995**
(21) Anmeldenummer: 91910666.6
(22) Anmeldetag: 15.06.1991
(51) Int. Cl.: B62K 21/16

(54) **MIT EINER LENKSÄULE VERBINDBARE LENKSTANGE EINES FAHRZEUGS**
STEERING ROD CONNECTABLE TO THE STEERING COLUMN OF A VEHICLE
GUIDON DE VEHICULE RELIABLE A UNE COLONNE DE DIRECTION

(30) Priorität: 18.06.1990 CH 2018/90
(43) Veröffentlichungstag der Anmeldung: 03.06.1992
(73) Patentinhaber: Thöny, Franz, FL-9496 Balzers (LI)
(72) Erfinder: Thöny, Franz, FL-9496 Balzers (LI)
(74) Vertreter: Büchel, Kurt F., Dr.
(86) Internationale Anmeldenummer: EP9101115
(87) Internationale Veröffentlichungsnummer: WO9119636

(56) Entgegenhaltungen:
- FR-A- 361 903
- FR-A- 1 502 875
- FR-E- 12 421
- US-A- 2 594 451

## Beschreibung

Die Erfindung bezieht sich auf eine Lenkstange nach dem Oberbegriff des Anspruches 1.

Derartige Lenkstangen sind in ihrer Lage in Bezug auf den Lenker in der Höhe verstellbar und zwar im allgemeinen über eine zweiteilige, ineinander verschiebbare Lenksäule, die dann in der gewünschten Höhe fixiert wird. Die Lenkstange selbst ist über einen Gelenkarm an der Lenksäule angelenkt und durch eine Rohrschelle an diesem fixiert. Nur wenn die Rohrschelle geöffnet, bzw. gelockert wird, kann die Lenkstange selbst gedreht und damit die Griffstellung relativ zum Lenker geändert werden. Beide Verstellmöglichkeiten, sowohl die Höhenverstellung als auch die Verdrehung, werden im allgemeinen nur ein einziges Mal, nämlich an die Person des Lenkers angepasst, vorgenommen, da die Fixierung sehr zuverlässig sein muss und keinesfalls während der Fahrt gelockert werden darf.

Gerade beim sportlichen Fahren, wie z.B. beim Fahren von Mountain-Bikes, wird aber diese Fixierung der Lenkstange als äusserst nachteilig empfunden. So wird beim Bergauffahren die Lenkstange meist als zu niedrig bzw. zu weit weg vom Körper empfunden, hingegen beim Bergabfahren als zu hoch bzw. zu nah am Körper. Ebenso wird nach längeren Fahrzeiten der Wunsch nach Verstellung - meist Erhöhung - der Lenkstange geäussert, um eine entspannt-bequeme Körperhaltung einnehmen zu können.

Zur Verstellung von Lenkstangen in bezug auf Höhe und/oder Relativlage zum Fahrer sind verschiedentlich Vorschläge gemacht worden.

So wird in der US-PS-2,594,451 eine Verstellmöglichkeit beschrieben, bei der ein federbelasteter Bolzen in Vertiefungen einer der Lenksäule zugeordneten Scheibe einrastet. Allerdings wird sich diese Verbindung bei stärkerer Beanspruchung des Rades, selbst bei zusätzlicher Klemmung des die Gelenkstange tragenden Gelenkarmes an der Scheibe, als ungenügend erweisen. Auch die zusätzliche Sicherung mittels eines Kreuzzapfens verhindert nur das unbeabsichtigte Lösen des Bolzens aus der Vertiefung. Die Verstellung selbst bedarf dreier Befestigungsschritte; die Lagefeststellung über einen - im wesentlichen schwachen - Bolzen allein erscheint als unsicher und bruchanfällig.

Bei der in der FR-PS-404.027 beschriebenen Verstellvorrichtung wird ein mit der Lenksäule verbundener Gelenkteil von den Backen eines die Lenkstange aufnehmenden Trägerarms umfasst, wobei sowohl der Gelenkteil als auch die Backen strahlenförmig konvergierende Riffelungen besitzen. Bei Verdrehung des Trägerarms können die gegengleichen Rastflächen an den Backen des Trägerarms bzw. an dem Gelenkteil ineinander einrasten, weil die Backen als solche elastisch nachgeben. Die gewünschte Verdrehstellung wird dann über einen Schraubbolzen gesichert. Aufgrund von öfters vorgenommenen Verstellungen und/oder ausgiebiger Benutzung des Fahrrades wird die Befestigungseinrichtung ein gewisses Spiel bekommen und nach einer gewissen Zeit wird - gerade aufgrund der Nachgiebigkeit der Backen - diese Verbindung unsicher werden. Es besteht die Gefahr, dass - insbesondere beim Querfeldeinfahren - Schläge die Verbindung lösen und der Trägerarm mit der Lenkstange unkontrolliert abknickt.

Der Erfindung liegt die Aufgabe zugrunde, eine Lenkstange in ihrer jeweiligen Lage leicht verstellbar zu machen, wobei sowohl eine Höhenverstellung als auch eine Verdrehung und damit eine Änderung der Entfernung zum Körper des Lenkers möglich ist. Wesentlich dabei ist die sicher vornehmbare Verstellung, die gegebenenfalls auch während des Fahrens möglich sein soll und eine sowohl in Extremsituationen als auch bei unbedachter Handhabung nicht lösbare Verbindung der Gelenkarmteile gewährleistet. Diese Aufgabe wird durch die kennzeichnenden Merkmale des Anspruches 1 gelöst.

Vorteilhafte Weiterbildungen sind in den kennzeichnenden Merkmalen der abhängigen Ansprüche beschrieben.

Eine solche Lenkstange kann prinzipiell für verschiedene Fahrzeuge, und zwar sowohl für muskelbetriebene als auch für motorisierte, angewandt werden. Beispiele hiefür wären Mofas, Dreiräder, Motorräder und dergleichen, aber auch Skibobs oder ähnliche, Lenkstangen aufweisende oder erfordernde Gleitfahrzeuge. Die Erfindung wird bevorzugt für Fahrräder eingesetzt. Dadurch, dass die Fixiereinrichtung einen Klemmgang aufweist, der geringer ist als die Erstreckung der Vorsprünge, ist ein ungewolltes und während des Fahrens äusserst gefährliches Lösen der Verbindung, selbst bei Benutzung durch Kinder, nicht möglich. Zum vollständigen Lösen der Verbindung müssen zusätzlich Mittel betätigt werden. Dies ist insbesondere dann problemlos, wenn die Vorsprünge, entsprechend Anspruch 2, bolzenförmig ausgebildet sind, das heisst, mit definierten, gegen die Verdrehrichtung stufenförmigen Flanken, und wenn die Rastflächen an starren Gelenkarmteilen ausgebildet sind und so - auch nach längerer Zeit - nicht nachgeben können.

Sind, entsprechend Anspruch 3, Vorsprünge vorgesehen, die in bezug auf beide Rastflächen beweglich sind, so kann, insbesondere wenn diese Vorsprünge federbelastet sind, die Verstellung der Lenkstange problemlos auch während des Fahrens vorgenommen werden. Dazu ist eine Ausbildung nach Anspruch 4 besonders vorteilhaft, bei der über die - insbesondere als Zahngetriebe oder Exzenterhebel ausgebildete - Fixiereinrichtung diese Bewegung bewirkt werden kann.

Die Stabilität der Lenkstangenbefestigung vor allem gegen seitliche Verdrehungen, wird erheblich verbessert, wenn gemäss Anspruch 5 der abknickbare Abschnitt zweiteilig ausgebildet ist.

Ist nach Lösen des Klemmganges der Widerstand einer Sperre, wie in Anspruch 6 dargelegt, zu überwinden, um die Vorsprünge voll lösen zu können, wird die Sicherheit gegen unsachliche Handhabung noch weiterhin erhöht.

Damit die Lenkstange auch in jeder wählbaren Verstellage gegenüber dem Lenker richtig ausgerichtet ist, bzw. seiner bevorzugten Haltung beim Fahren entsprechend eingestellt werden kann, können Vorrichtungen entsprechend den Ansprüchen 7 bis 9 vorgesehen werden.

Weitere Einzelheiten der Erfindung ergeben sich an Hand der nachfolgenden Beschreibung von in der Zeichnung schematisch dargestellten Ausführungsbeispielen. Es zeigen:
- Fig.1: ein erfindungsgemässes Fahrrad in Perspektive;
- Fig.2: eine Lenkstange an einer Lenksäule in einer Seitenansicht, teilweise im Schnitt;
- Fig.3: eine explodierte Darstellung einer Ausführungsform der Fixiereinrichtung in axonometrischer Ansicht;
- Fig.4 und 5: eine Seiten- bzw. eine Draufsicht, teilweise im Schnitt, entsprechend der Fig.2;
- Fig.4a: einen Schnitt längs der Linie AA der Fig.4;
- Fig.6: eine Draufsicht auf die Lenksäule und eine Verbindungsanordnung gemäss einer Ausführungsvariante;
- Fig.7: eine Variante mit verstärkter Verbindungsanordnung zwischen Lenksäule und Lenkstange; und
- Fig.7a: einen Schnitt durch eine andere Variante entsprechend Fig.7.

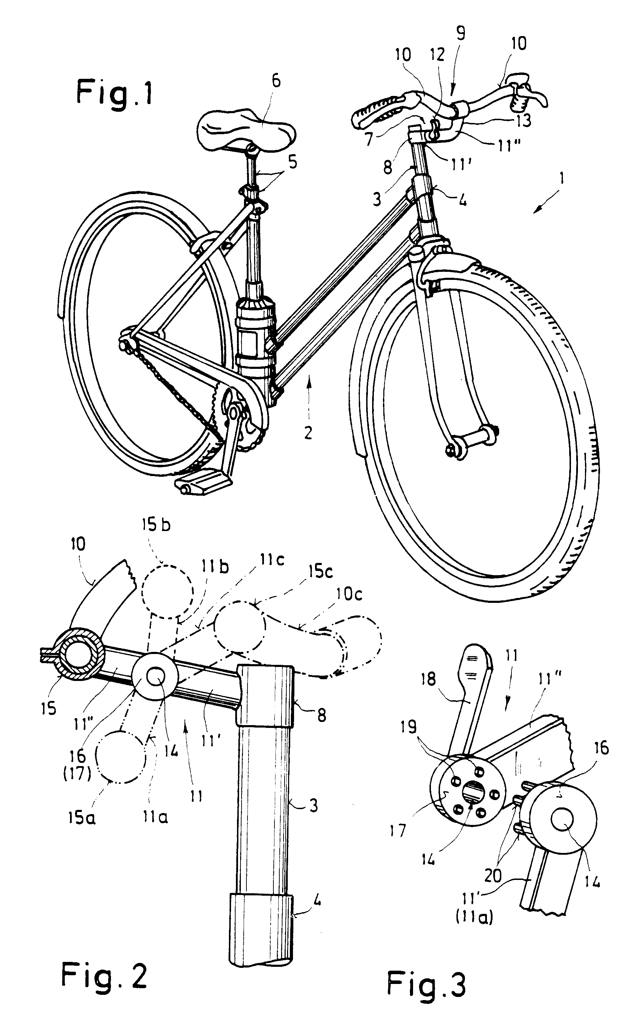

Gemäss Fig.1 weist ein Fahrrad 1 einen Fahrradrahmen 2 auf. Die Lenksäule 3 ist zweiteilig ausgeführt und teleskopartig höhenverstellbar, wobei die Befestigung beispielsweise über eine Rohrschelle 4 erfolgt.

Am oberen Ende der Lenksäule 3 ist eine Verbindungsanordnung 7 vorgesehen. Diese Verbindungsanordnung 7 besteht in diesem Fall aus zwei Gelenkarmteilen 11' und 11''; sie kann jedoch, wie weiter unten dargestellt, nur ein- oder auch mehrteilig ausgeführt sein. In dem in Fig.1 und 2 dargestellten Fall wird die Verbindungsanordnung 7 über eine Verbindungshülse 8 an der Lenksäule 3 fixiert. Genausogut kann die Verbindungsanordnung an der Lenksäule verschweisst bzw. verlötet sein. Die gerade oder auch geschwungen ausgeführte Lenkstange 9 ist an der Verbindungsanordnung 7 durch eine Rohrschelle 15 festgehalten.

Um nun die Lenkstange 9 leicht und mühelos in ihrer Relativlage zum Lenker, sowohl in Bezug auf ihre Höhe als auch auf die Entfernung zum Körper des Lenkers verstellen zu können, genügt es, eine Fixierverschraubung 12 am Gelenkarm 11 und damit die Verbindungsanordnung 7 zu lösen, wie im folgenden erläutert wird.

In Fig.2 ist eine Ausführung dargestellt, bei der der Gelenkarm 11 aus zwei über eine Gelenkachse 14 miteinander verbundenen Teilen 11',11'' besteht. Der Teil 11'' trägt dabei die Lenkstange 9 mit ihren Griffen 10 (nur einer ist dargestellt), wogegen der Teil 11' mit der Verbindungshülse 8 und über diese mit der Lenksäule 3 fest verbunden ist.

Der starr mit der Lenksäule 3 verbundene Abschnitt 11' des Gelenkarms erstreckt sich im wesentlichen horizontal bzw. ist leicht aufwärts gerichtet. Es sei erwähnt, dass zwar an Hand der Zeichnung stets nur ein einziger Gelenkarm mit einer einzigen Gelenkachse 14 beschrieben wird und dass diese Ausführung den Bedürfnissen im allgemeinen genügen wird, weshalb sie - auf Grund der Einfachheit der Konstruktion - auch bevorzugt ist. Es kann aber auch erwünscht sein, einen aus drei oder mehr Gelenkteilen mit zwei oder mehr Gelenkachsen zusammengesetzten Gelenkarm zu verwenden.

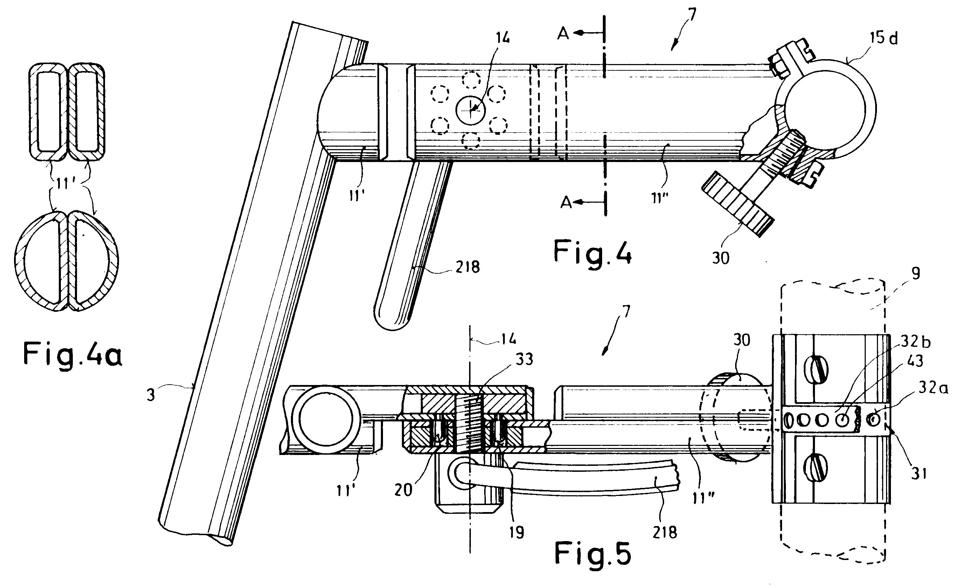

In Fig.2 sind verschiedene, mögliche Stellungen des Gelenkarmabschnittes 11'' strichliert, strich-punktiert und strich-punktiert-punktiert dargestellt, wobei der Abschnitt 11'' in die Stellungen 11a,11b und 11c gebracht werden kann, in welch letzterer Stellung die Griffstange 9 die dargestellte Position 10c einnimmt. Ebenfalls dargestellt ist die jeweilige Stellung der die Lenkstange umfassenden Verbindungsschelle 15 in ihren Positionen 15a,15b und 15c. Daraus ist ersichtlich, dass die Lenkstange je nach Wunsch auf einfache Weise in verschiedene Höhenlagen verstellt werden kann. Wie leicht ersichtlich, ergibt sich dabei für geschwungene Lenkstangen auch noch die Möglichkeit, unterschiedlich abgewinkelte Griffstellungen zu erhalten. Da aber in jeder dieser Stellungen die Bremsen gleich zuverlässig benutzt werden müssen, wird die in Fig.4 und 5 dargestellte Lenkstangennachstellung vorzuziehen sein, so dass dann auch die Stellungen der Griffe und damit auch die der Bremsen trotz Verstellung der Lenkstange immer gleich sind. Um die Lenkstange dabei in jeder Lage mit Sicherheit fixieren zu können, weist der Gelenkarm 11 vorzugsweise verbreiterte Rastflächen 16,17 auf, die an Hand eines bevorzugten, in Fig.3 gezeigten Ausführungsbeispieles, erläutert werden.

Wie aus Fig.3 ersichtlich, sind die beiden Abschnitte 11' und 11'' (Position 11a) des Gelenkarmes 11 über die einander zugekehrten Rastflächen 16,17 miteinander verbunden. Die Achse 14 dieses Gelenkes ist als Schraube ausgebildet, an der eine mit einem relativ langen Betätigungshebel 18 verbundene (nicht gezeigte) Mutter am hier nicht sichtbaren Ende der Schraube 14 in diese verschraubt ist, um die beiden Flächen 16,17 gegeneinanderzupressen. Diese Verbindungsschraube kann auch als Exzenter-Hebelschraube ausgeführt sein. Die Rastfläche 17 besitzt eine Reihe von - über einen gedachten Kreis mit der Achse 14 als Mittelpunkt verteilten - Vertiefungen 19, die zweckmässig kreisförmig sind, um die Bolzen 20 an der Rastfläche 16 aufzunehmen. Im Prinzip könnten die Vertiefungen und Bolzen die unterschiedlichsten Formen aufweisen; die Durchmesser der Bolzen und der Vertiefungen sollten einander aber entsprechen, damit die Gelenkabschnitte 11',11'' nach dem Eindringen der Bolzen 20 in die Vertiefungen 19 unverdrehbar gehalten sind.

Somit kann die Verbindung durch Lösen der Schraubverbindung infolge Verdrehung des Hebels 18 so weit freigegeben werden, dass die Bolzen 20 aus den Rastvertiefungen 19 heraustreten können, worauf die beiden Gelenkabschnitte 11' und 11'' in eine neue Position bringbar sind. Dabei bleibt vorzugsweise die Verbindung über die genügend lang ausgebildete Schraubenachse 14 erhalten, die im allgemeinen nur zu Reparatur- bzw. Wartungsarbeiten vollständig gelöst werden muss.

Die Anzahl der Bolzen bzw. Vertiefungen kann an sich beliebig gewählt werden, doch versteht es sich, dass zwei solcher Rasten 19,20 das Mindestmass darstellen.

Das Lösen der Verbindung zwischen den beiden Rastflächen 16, 17 über den Betätigungshebel 18 geschieht dabei erfindungsgemäss in zwei Schritten. Ein sichernder Klemmgang, der entweder durch eine bis zu einem Sperrwiderstand mögliche Umdrehung, die Verdrehung einer Exzenterschraube, die Verdrehung oder das Entfernen einer Sicherungsmutter, oder das Umklappen eines Klemmhebels bestimmt ist, ist vorgesehen, um diese Verbindung zwar zu lockern, aber noch nicht zu lösen. Die Bolzen 20 sind dementsprechend so dimensioniert, dass sie auch nach Lösen dieser Klemmung noch in die Vertiefungen 19 eingreifen. Erst nach weiterem Betätigen der Fixiereinrichtung 18, das beispielsweise durch Überwinden eines der Schraubwindung zugeordneten Gesperres geschieht, sind die Bolzen 20 aus den Vertiefungen 19 lösbar und damit die beiden Gelenkarme 11 gegeneinander verdrehbar.

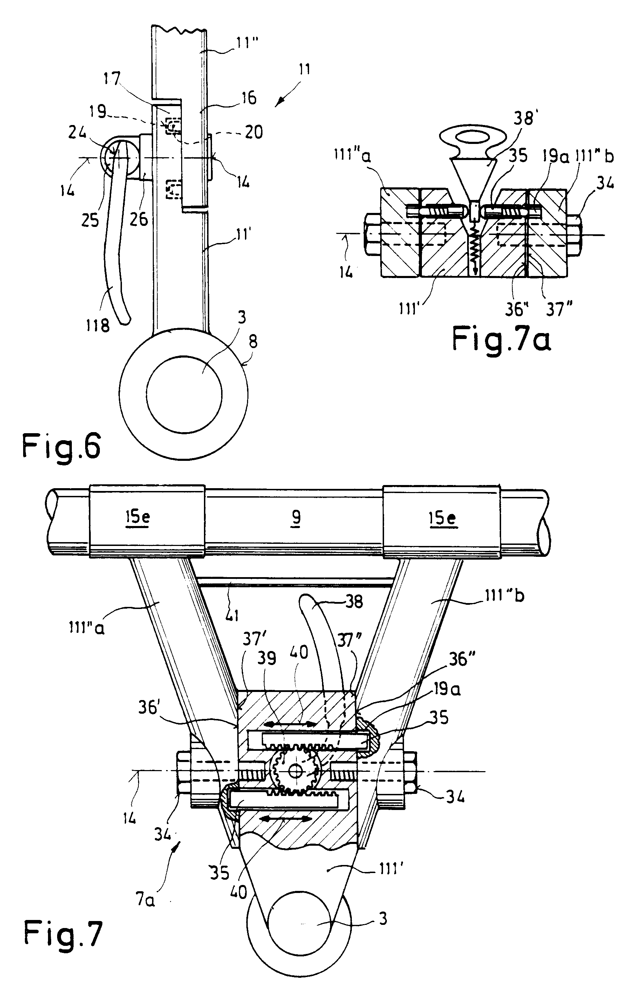

Der Sperrwiderstand, der nach Aufhebung der Klemmung zum vollständigen Lösen der Verbindung überwunden werden muss, kann in unterschiedlichster Weise vorgesehen sein. So ist er in Form von Sperrklinken oder Klemmgesperren möglich, es kann aber auch eine rein mechanische Hemmung, wie sie weiter unten anhand der Fig.7 beschrieben wird, zum Einsatz kommen.

Aus Fig.4 und 5 ist eine bevorzugte Ausführung zu ersehen, wobei die Lenkstange 9 (in Fig.5 angedeutet) über eine mittels wenigstens einer Sicherungsschraube 30 fixier- bzw. lösbare Rohrschelle 15d mit der Verbindungsanordnung 7 verbunden ist. Damit ist, wie schon oben dargestellt, die Möglichkeit gegeben, beim Verdrehen der beiden Gelenkabschnitte 11' und 11'' um die Gelenkachse 14 gleichzeitig auch die Lenkstange 9 mitzudrehen. Damit dabei die Lenkstange immer zentriert bleibt, ist die Rohrschelle 15d zweiteilig bzw. mit einem Mittelschlitz 31 ausgeführt, in dem ein an der Lenkstange 9 vorgesehener Vorsprung 32 geführt läuft. Die Enden dieses Mittelschlitzes 31 können somit als Anschläge für die Extrem-Endstellungen der Lenkstange 9 dienen, die durch die maximal mögliche Verstellung um die Gelenkachse 14 vorgegeben ist.

In Fig.5 sind zwei Varianten zur Ausbildung eines solchen Vorsprungs 32 dargestellt. Der Vorsprung 32a kann beispielsweise als Schraubenkopf auszuführen sein, damit die Lenkstange 9 bei Reparaturen in der Rohrschelle 15d leicht verschoben werden kann. Eine andere Möglichkeit, den Vorsprung 32 auszuführen, besteht darin, einen mit Löchern 43 versehenen Ring 32b vorzusehen, der an der Lenkstange 9 befestigt ist. Dieser Ring 32b (in Fig.5 nur teilweise abgebildet) kann auch nur als Ringsegment ausgebildet sein, wenn der Mittelschlitz 31 nicht durchgehend vorgesehen ist. Die Sicherungsschraube 30 kann zum Beispiel gegen die Zugkraft einer Spannfeder (nicht dargestellt) aus einem der Löcher 43 gezogen werden und in der gewünschten Position des Lenkers federbelastet wieder einschnappen. Ebenso aber ist die Fixierung der Sicherungsschraube 30 über ein in den Löchern 43 vorgesehenes Schraubengewinde möglich.

Fig.4a, die einen Schnitt längs der Linie A-A der Fig.4 darstellt, zeigt eine vorteilhafte Ausbildung der Verbindungsanordnung 7 in Form von zwei zueinander symmetrischen Profilrohren. Die Rastflächen 16 und 17 sind auf diese Weise bereits vorgegeben, wie insbesondere aus Fig.5, die einen Schnitt durch die Verbindungsanordnung 7 zeigt, leicht zu ersehen ist. Sowohl Bolzen 20 als auch Vertiefungen 19 sind hier einfach anzubringen. Eine Exzenter-Hebelschraube 218 bewirkt eine schnell lösbare und sicher fixierende Verbindung der Gelenkabschnitte. Die vollständige Lösung der Bolzen 20 aus den Vertiefungen 19 geschieht in der anhand der Fig.3 beschriebenen Weise. Um die Gelenkabschnitte bequem verstellen zu können, sollte auch hier der die Gelenkachse 14 bestimmende Bolzen 33 der Klemm- bzw. Schraubenverbindung 218 bzw. 18 länger sein als die Bolzen 20.
Fig.6 zeigt eine leicht abgewandelte Ausbildung in Draufsicht. Dabei besitzt die Gelenkachse 14 an einem Ende eine Abflachung 24, in der die Achse eines mittels eines Betätigungshebels 118 verdrehbaren Exzenters 25 gelagert ist. Der Exzenter 25 drückt gegen einen mit der Rastfläche 17 verbundenen Bund 26, um so die beiden Rastflächen 16,17 gegeneinander zu pressen.Die vollständige Lösung der beiden Rastflächen 16, 17 kann dann beispielsweise durch einfaches Schrauben geschehen.

Die Verbindungsanordnung kann auch nur einteilig ausgeführt sein, wobei dann ein einziger Gelenkarm mit seiner Rastfläche direkt an der gegebenenfalls auch gebogenen Lenksäule und einer daran vorgesehenen Rastfläche angelenkt ist. Dies kann beispielsweise auf eine der Fig.3 entsprechende Weise geschehen. Diese einarmige Ausführung hat den Vorteil der sehr unterschiedlichen Höhenverstellungsmöglichkeit.

Für besonders extremen Einsatz, wie es z.B. beim Trialfahren der Fall ist, wird die Lenkstange 9 zweifach gehaltert ausgebildet, wie in Fig.7 dargestellt. Die Verbindungsanordnung 7a ist dazu beispielsweise V-förmig ausgebildet, die Lenkstange 9 wird daran über zwei Rohrschellen 15e fixiert. Um hier die Lenkstange 9 in oben beschriebener Weise verstellen zu können, greifen in den einen Gelenkabschnitt 111', der mit der Lenksäule 3 fest verbunden ist, zwei Gelenkabschnitte 111''a und 111''b ein. Der Gelenkabschnitt 111' weist demzufolge zwei Rastflächen 37' und 37'' auf, die mit den Rastflächen 36' und 36'' der beiden Gelenkabschnitte 111''a und 111''b zusammenwirken. Die Gelenkachse 14 ist durch die die Gelenkabschnitte 111' und 111'' verbindenden Schrauben 34 festgelegt. Diese Schrauben 34 müssen hier weder gelockert noch geöffnet werden, wenn eine Verstellung der Lenkstange 9 gewünscht wird.

Die lösbare Verbindung der Gelenkabschnitte 111' und 111'' geschieht über verschiebbare Bolzen 35. Ein Drehhebel 38, dessen Klemmgang in oben dargestellter Form zuerst gelöst werden muss, verdreht ein mit Zähnen versehenes Zylinderrad 39, das in die einseitig ebenfalls mit Zähnen versehenen Bolzen 35 eingreift und damit eine gegengleiche Verschiebung der Bolzen 35 entsprechend den Pfeilen 40 in Vertiefungen 19a ermöglicht. Bei dieser Anordnung sind die sichernden Bolzen 35 für einen Gelenkabschnitt 111'' jeweils nur einseitig und übereinander liegend vorgesehen. Mit je zwei Bolzen 35 und entsprechenden Vertiefungen 19a pro Rastflächenpaar 36 und 37 wird im allgemeinen das Auslangen zu finden sein. Zur besseren Verklemmung in den Vertiefungen 19a können die Bolzen 35 leicht konisch ausgebildet sein.

Ist beispielsweise der Betätigungshebel der Fixiereinrichtung 38 nach unten gebogen ausgebildet, so verunmöglicht der Gelenkarmteil 111''a das Weiterdrehen des Hebels und damit das vollständige Lösen der Bolzen 35 aus den Vertiefungen 19a. Dazu muss danach der Hebel hochgedreht oder weggeklappt werden, womit eine den oben beschriebenen Sperrsicherungen entsprechende Massnahme getroffen ist.

Anstelle der beschriebenen Bolzenfixierung und -verstellung über das Zahnrad können die Bolzen auch über eine exzentrische Mutter in die vorgesehenen Vertiefungen gedrückt werden. Wird diese Mutter über den Drehhebel verdreht, so werden die Bolzen durch Rückstellfedern in ihre Führungen im festen, an die Lenksäule angelenkten Gelenkabschnitt zurückgedrückt. Hier können die Bolzen, je nach Lage, Grösse und Form der Mutter, unterschiedlich verteilt in den Rastflächen angeordnet sein.

Fig.7a zeigt einen Schnitt durch eine andere Ausführungsvariante entsprechend der Fig.7. Dabei wird eine zugfederbelastete, kegelförmige Fixiereinrichtung 38' in eine entsprechende Ausnehmung am Gelenkarm 111' eingedrückt, wobei die in Bezug auf beide Rastflächen 36 und 37 jedes Gelenkarmteils 111'' beweglichen Bolzen 35, die ebenfalls zugfederbelastet ausgebildet sind, in die Vertiefungen 19a der Gelenkarmteile 111'' hineingedrückt werden. Zur sichernden Verklemmung der Verbindung ist die Fixiereinrichtung 38' in Form einer Renkverbindung, beispielsweise einer Bajonettverbindung zusammensteckbar und danach verschieb- bzw. verdrehbar vorgesehen. Bolzen 35 und/oder Fixiereinrichtung 38' können in gleicher Weise auch druckfederbelastet ausgebildet sein.

Die Lenkstange 9 selbst kann, wie oben beschrieben, in den Rohrschellen 15e nachgedreht werden. Damit es dabei, genau so wie bei der Verstellung der Lenkstange 9 über die Gelenkabschnitte 111' und 111'', nicht zur gegenseitigen Verkippung der beiden Gelenkabschnitte 111''a und 111''b kommen kann, ist eine dünne, sichernde Verbindung 41 dieser beiden Abschnitte 111'' vorgesehen.

Eine Anordnung mit gegenüber beiden Rastflächen beweglichen Bolzen, entsprechend der Fig7, ist in gleicher Weise auch für nur ein einziges Rastflächenpaar möglich.

Im Rahmen der Erfindung sind zahlreiche Varianten denkbar; so könnte der Gelenkabschnitt 11' mit einem Schneckenrad verbunden sein, das in eine selbsthemmende, mit dem Abschnitt 11'' verbundene und an ihm gelagerte Schnecke eingreift, um so eine stufenlose Verstellbarkeit zu verwirklichen. Die Schnecke kann dann entweder über eine Handkurbel antreibbar sein, wird aber bevorzugt durch einen Servomotor angetrieben, der vom Dynamo des Fahrrades oder eine am Rahmen 2 angebrachte Batterie versorgt wird. Auf diese Weise ist es möglich, auch während der Fahrt die Lenkstange durch blosses Betätigen eines Motorschalters zu verstellen, ohne deshalb vom Verkehrsgeschehen abgelenkt zu werden. Im Prinzip müsste dabei die Schnecke (oder ein anderes Getriebe) gar nicht selbsthemmend sein, weil es auch möglich wäre am Ende jeder Betätigung eine automatische Bremse wirksam werden zu lassen, doch entfallen die zur Bremse gehörigen Konstruktionsteile, wenn ein selbsthemmendes Getriebe gewählt wird.

## Patentansprüche

1. Mit einer Lenksäule (3) über eine mittig gelegene Verbindungsanordnung (7) verbindbare Lenkstange (9) eines Fahrzeuges (1), mit einem um wenigstens eine Gelenkachse (14) knickbaren und in verschiedenen Raststellungen über eine Fixiereinrichtung (18;12;118;218;38) fixierbaren Gelenkarm (11;111), wobei die Raststellungen durch in Vertiefungen (19) greifende Vorsprünge (20;35) an zwei einander gegenüberliegenden, an den Gelenkarmteilen ausgebildeten Rastflächen (16,17;36,37) definiert sind, dadurch gekennzeichnet, dass die Fixiereinrichtung (18;12; 38;118;218) ein Mittel zum Ausführen zweier Betätigungsschritte, das Lösen der Vorsprünge (20;35) aus den Vertiefungen (19) betreffend, umfasst, wobei ein erster Schritt die Klemmung der Vorsprünge (20;35) in den Vertiefungen (19) aufhebt und ein zweiter Schritt, der das vollständige Lösen der Vorsprünge (20;35) aus den Vertiefungen (19) bewirkt, das Lösen einer Sicherung impliziert.

2. Lenkstange nach Anspruch 1, dadurch gekennzeichnet, dass wenigstens zwei bolzenförmige Vorsprünge (20;35) pro Rastflächenpaar (16;17;36;37) vorgesehen sind und dass jede Rastfläche (16;17;36;37) an ihrem Gelenkarmteil unelastisch ausgebildet ist.

3. Lenkstange nach Anspruch 1 oder 2, dadurch gekennzeichnet, dass die Vorsprünge (35) einer ersten Rastfläche (37) gegenüber dieser beweglich angeordnet und - gegebenenfalls gegen die Rückstellkraft einer Rückhaltefeder wirkende - Mittel zur Bewegung dieser Vorsprünge (35) in die Vertiefungen (19) der zweiten Rastfläche (36) hinein vorgesehen sind.

4. Lenkstange nach Anspruch 3, dadurch gekennzeichnet, dass die Fixiereinrichtung (38) zur Bewegung der Vorsprünge (35) gegenüber der ersten Rastfläche (37) ausgebildet ist, insbesondere in Form eines Zahngetriebes oder eines Exzenterhebels (38).

5. Lenkstange nach einem der vorhergehenden Ansprüche, dadurch gekennzeichnet, dass der abknickbare Abschnitt des Gelenkarms (111'') zweiteilig und um die gemeinsame Gelenkachse (14) knickbar ist.

6. Lenkstange, nach einem der vorhergehenden Ansprüche, dadurch gekennzeichnet, dass ein Sperrwiderstand, vorzugsweise an der Fixiereinrichtung (18; 12; 118; 218; 38) selbst, vorgesehen ist.

7. Lenkstange nach einem der vorhergehenden Ansprüche, dadurch gekennzeichnet, dass die Verbindungsanordnung (7) über wenigstens eine, vorzugsweise zweiteilige, Rohrschelle (15) mittels einer Sicherungsschraube (30) mit der verdrehbaren Lenkstange (9) verbindbar ist.

8. Lenkstange nach Anspruch 7, dadurch gekennzeichnet, dass die Rohrschelle (15) zwei Anschläge zur Begrenzung der Verdrehung der Lenkstange (9) und diese wenigstens einen - vorzugsweise schraubenkopfförmigen - Widerpart (32a) zum Zusammenwirken mit jenen Anschlägen aufweist.

9. Lenkstange nach Anspruch 7 oder 8, dadurch gekennzeichnet, dass die Sicherungsschraube (30) - insbesondere zugfederbelastet - in beabstandete Löcher (43) an der Lenkstange (9) - vorzugsweise an einem innerhalb der Aussparung der Rohrschelle (15) angeordneten Ring (32b) - einsteckbar ist.

## Claims

1. A steering rod (9) of a vehicle (1), which steering rod (9) can be connected to a steering column (3) by a centrally located connecting arrangement (7) and has an articulated arm (11;111) which can be swivelled about at least one hinge pin (14) and can be fixed in different locking positions by a fixing means (18;12;118;218;38), the locking positions being defined by projections (20;35), engaging depressions (19), on two locking surfaces (16,17;36,37) opposite one another and formed in the articulated arm parts wherein the fixing means (18;12;118;218;38) comprises a means for effectuating two actuating steps relative to the release of the projections (20;35) from the depressions, wherby a first step removes the clamping of the projections (20,35) in the depressions (19) and a second step implies the loosening of a safety device thereby resulting in a complete release of the projections (20;35) from the depressions (19).

2. A steering rod as claimed in claim 1, wherein at least two pin-like projections (20;35) are provided per pair of locking surfaces (16;17;36;37) and each locking surface (16;17;36;37) is inelastic in its articulated arm part.

3. A steering rod as claimed in claim 1 or 2, wherein the projections (35) of a first locking surface (37) are arranged removably with respect to said surface, and means - if necessary acting against the restoring force of a retaining spring - are provided for moving these projections (35) into the depressions (19) of the second locking surface (36).

4. A steering rod as claimed in claim 3, wherein the fixing means (38) is formed for moving the projections (35) relative to the first locking surface (37), in particular in the form of a toothed gear or of an eccentric lever (38).

5. A steering rod as claimed in any of the preceding claims, wherein the swivellable section of the articulated arm (111') is in two parts and can be swivelled about the common hinge pin (14).

6. A steering rod as claimed in any of the preceding claims, wherein one blocking resistance is provided, preferably on the fixing means (18;12;118,218;38) itself.

7. A steering rod as claimed in any of the preceding claims, wherein the connecting arrangement (7) can be connected to the rotatable steering rod (9) via at least one, preferably two-part, tube clamp (15) by means of a securing screw (30).

8. A steering rod as claimed in claim 7, wherein the tube clamp (15) has two stops for limiting the rotation of the steering rod (9), and the latter has at least one - preferably screw head-shaped - counterpart (32a) for cooperating with said stops.

9. A steering rod as claimed in claim 7 or 8, wherein the securing screw (30) can be inserted - in particular under a load from a tension spring - into holes (43) a distance apart in the steering rod (9) - preferably in a ring (32b) arranged within the recess of the tube clamp (15).

## Revendications

1. Guidon (9) d'un véhicule (1) pouvant être relié à une colonne de direction (3) par l'intermédiaire d'un dispositif de liaison (7) central, doté d'un bras articulé (11; 111) pouvant être replié autour d'au moins un axe articulé (14) et fixé dans différentes positions de crantage par un dispositif de fixation (18 ; 12 ; 118 ; 218 ; 38), les positions de crantage étant constituées de saillies (20 ; 35) s'encastrant dans des encoches (19) situées sur deux surfaces d'arrêt (16, 17 ; 36, 37) opposées réalisées sur les parties du bras articulé, carctérisé en ce que le dispositif de fixation (18;12;118;218;38) comprend un moyen pour accomplir deux pas d'actionnement concernant l'extraction totale des saillies (20;35) des encoches (19), où un premier pas supprime le serrage des saillies (29;35) dans les encoches (19) et un deuxième pas implique le débloquement d'un dispositif de sécurité causant ainsi l'extraxtion totale des sailiies (29;35) des encoches.

2. Guidon selon la revendication 1, caractérisé en ce qu'au moins deux saillies (20 ; 35) en forme de cheville sont prévues par paire de surfaces d'arrêt (16 ; 17 ; 36 ; 37), et en ce que chaque surface d'arrêt (16 ; 17 ; 36 ; 37) est réalisée sur sa partie de bras articulé de manière inélastique.

3. Guidon selon la revendication 1 ou 2, caractérisé en ce que les saillies (35) d'une première surface d'arrêt (37) sont disposées de manière mobile par rapport à cette dernière, et en ce que des moyens qui agissent, le cas échéant, contre la force de rappel d'un ressort de retenue sont prévus pour déplacer ces saillies (35) dans les encoches (19) de la seconde surface d'arrêt (36).

4. Guidon selon la revendication 3, caractérisé en ce que le dispositif de fixation (38) est réalisé en particulier sous la forme d'un engrenage ou d'un levier de réglage (38) pour déplacer les saillies (35) par rapport à la première surface d'arrêt (37).

5. Guidon selon l'une des revendications précédentes, caractérisé en ce que le segment du bras articulé (111'') pouvant être replié se compose de deux parties et peut être replié autour de l'axe articulé (14) commun.

6. Guidon selon l'une des revendications précédentes, caractérisé en ce qu'une résistance de blocage est prévue, de préférence sur le dispositif de fixation (18;12;118;218;38) lui-même.

7. Guidon selon l'une des revendications précédentes, caractérisé en ce que le dispositif de liaison (7) peut être relié au guidon (9) pouvant tourner par au moins un collier d'attache (15), de préférence en deux parties, à l'aide d'une vis de blocage (30).

8. Guidon selon la revendication 7, caractérisé en ce que le collier d'attache (15) présente deux arrêts pour limiter la rotation du guidon (9), et en ce que ce dernier présente au moins un pendant (32a), de préférence en forme de tête de vis, se combinant avec ces arrêts.

9. Guidon selon la revendication 7 ou 8, caractérisé en ce que la vis de blocage (30), en particulier sous l'action d'un ressort de mouvement, peut être introduite dans des trous (43) écartés situés sur le guidon (9), de préférence sur une bague (32b) disposée dans la cavité du collier d'attache (15).
